(19) Europäisches Patentamt
European Patent Office
Office européen des brevets

(11) Publication number: 0 246 683 A2

# (12) EUROPEAN PATENT APPLICATION

(21) Application number: 87200733.1

(51) Int. Cl.[4]: C08G 67/02

(22) Date of filing: 15.04.87

(30) Priority: 13.05.86 NL 8601198

(43) Date of publication of application: 25.11.87 Bulletin 87/48

(84) Designated Contracting States: BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Drent, Eit
Badhuisweg 3
NL-1031 CM Amsterdam(NL)

(74) Representative: Aalbers, Onno et al
P.O. Box 302
NL-2501 CH The Hague(NL)

## (54) Process for the preparation of polymers.

(57) Process for the preparation of polymers, characterized in that a mixture of carbon monoxide and one or more olefinically unsaturated organic compounds is polymerized by using a catalyst composition based upon

a) a palladium compound,

b) a bidentate ligand of the general formula $R^1R^2$-M-R-M-$R^3R^4$ wherein M represents phosphorus, arsenic or antimony, $R^1$, $R^2$, $R^3$ and $R^4$ represent hydrocarbyl groups which may or may not be substituted with polar groups and R represents a bivalent organic bridging group containing at least two carbon atoms in the bridge, and

c) a halide of tin or germanium, on the understanding that the presence of this halide is not compulsory when the composition contains a palladium halide.

EP 0 246 683 A2

## POLYMER PREPARATION

The invention relates to a process for the preparation of polymers of carbon monoxide with one or more olefinically unsaturated organic compounds.

An investigation recently carried out by the Applicant into the preparation of high molecular weight linear polymers of carbon monoxide with one ore more olefinically unsaturated organic compounds (for the sake of brevity referred to an A), wherein the monomer units occur in alternating order and which polymers therefore consist of units of the general formula -CO-A'-wherein A' represents a monomer unit from a monomer A used, has shown that such polymers can be prepared by using catalyst compositions based upon:

a) a palladium compound,

b) a nitrogen bidentate ligand of the general formula

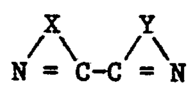

wherein X and Y represent similar or different bridging groups, each containing three or four atoms in the bridge at least two of which are carbon atoms, and

c) an acid with a pKa of less than 2, such as para-toluenesulphonic acid or a metal salt of such an acid, for example a tin or germanium salt.

The investigation has shown that the afore-mentioned polymers can also be prepared by using catalyst compositions based upon the components a) and c) mentioned above but having for the component b) not the nitrogen bidentate ligand but a bidentate ligand of the general formula $R^1R^2$-M-R-M-$R^3R^4$, wherein M represents phosphorus, arsenic or antimony, $R^1$ $R^2$, $R^3$ and $R^4$ represent hydrocarbyl groups which may or may not be substituted with polar groups and R represents a bivalent organic bridging group which contains at least two carbon atoms in the bridge. The investigation has further revealed that the activity of catalyst compositions based upon components a)-c) and having a nitrogen bidentate ligand for component b) is to a great extent dependent on the nature of the component c) used. It was found that whereas the use of para-toluenesulphonic acid as component c) yielded catalyst compositions with a very attractive activity, this activity was lost altogether when the para-toluenesulphonic acid was replaced by a hydrohalogenic acid, such as hydrochloric acid. The same phenomenon was observed upon replacing the para-toluenesulphonic acid by a halide of tin or germanium, such as a chloride, as the component c). This likewise resulted in a total loss of activity in the catalyst composition.

Further investigation into this subject has shown that catalyst compositions based upon components a)-c) and having a phosphorus, arsenic or antimony bidentate ligand for component b) react to the use of a hydrohalogenic acid for component c) in a way analogous to that of the catalyst compositions based upon components a)-c) which have a nitrogen bidentate ligand for component b). In catalyst compositions based upon components a)-c) and having a phosphorus, arsenic or antimony bidentate ligand for component b) the use of para-toluenesulphonic acid for component c) results in catalyst compositions having a very attractive activity, whereas this activity is lost almost completely when the para-toluenesulphonic acid is replaced by a hydrohalogenic acid, such as hydrochloric acid.

In view of the disappointing results obtained with hydrohalogenic acids such as hydrochloric acid as the component c) both in catalyst compositions containing a nitrogen bidentate ligand as component b) and in catalyst compositions containing a phosphorus, arsenic or antimony bidentate ligand as component b), as well as the equally disappointing results of the use of halides of tin or germanium, such as chlorides, as the component c) in the catalyst compositions in which the component b) is a nitrogen bidentate ligand, it was thus far assumed that halides of tin or germanium were not eligible for use as the component c) in catalyst compositions having a phosphorus, arsenic or antimony bidentate ligand for component b).

In sharp contrast with what was expected on the strength of the above observations it has now been found that catalyst compositions based upon components a)-c) and having a phosphorus, arsenic or antimony bidentate ligand for component b), which catalyst compositions possess attractive activities for the afore-mentioned polymerization, can be obtained by applying during their preparation a tin or germanium halide as component c). The investigation has further surprisingly shown that when a palladium halide is used as component a) in catalyst compositions which contain a phosphorus, arsenic or antimony bidentate ligand as component b), this results in catalyst compositions which in themselves show attractive activities for the polymerization of carbon monoxide with one or more olefinically unsaturated organic compounds, even without a tin or germanium halide being present as component c).

The present patent application therefore relates to a process for the preparation of polymers, in which process a mixture of carbon monoxide and one or more olefinically unsaturated organic compounds is polymerized by using a catalyst composition based upon

a) a palladium compound,

b) a bidentate ligand of the general formula $R^1R^2$-M-R-M-$R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group containing at least two carbon atoms in the bridge, and

c) a halide of tin or germanium, on the understanding that the presence of this halide is not compulsory when a palladium halide is present in the composition.

The patent application further relates to the polymers thus prepared and to shaped objects consisting at least partly of polymers thus prepared.

A very suitable component a) is a palladium salt of a carboxylic acid and in particular palladium acetate. Other very suitable components a) are organic complexes containing a palladium halide, in particular palladium chloride. An example of such a complex is a complex of palladium chloride and triarylphosphine, which complex contains 2 mol of triarylphosphine per mol of palladium chloride.

In the bidentate ligand used as component b) M is preferred to be phosphorus. The groups $R^1$, $R^2$, $R^3$ and $R^4$ present in the bidentate ligand preferably contain 6 to 14 carbon atoms. Special preference is given to bidentate ligands in which the groups $R^1$, $R^2$, $R^3$ and $R^4$ are phenyl groups or substituted phenyl groups. The bivalent organic bridging group R preferably contains three carbon atoms in the bridge. Examples of suitable bidentate ligands are 1,3-bis(di-p-tolylphosphine)propane, 1,3-bis(di-p-chlorophenylphosphine)propane, 1,3-bis(di-p-methoxyphenylphosphine)propane, 1,3-bis-(diphenylphosphine)propane and 2-methyl-2-(methyldiphenylphosphine)-1,3-bis-(diphenylphosphine)propane.

Either one of the latter two bidentate ligands is preferred. The bidentate ligand is preferably used in a quantity of 0.1-5 and in particular of 0.5-1.5 mol per mol of palladium compound.

Optionally components a) and b) may be combined for use in a single compound. An example of such a compound is a complex of a palladium halide and a phosphorus bidentate ligand in which complex the two components a) and b) are present in a molar ratio of 1:1. Such a complex can be prepared for instance by dissolving palladium acetate in ethanol, then adding to this solution 2 mol of hydrochloric acid per mol of palladium acetate and finally adding to the solution of palladium chloride in ethanol thus obtained 1 mol of 1,3-bis-(diphenylphosphine)propane per mol of palladium chloride, upon which the complex [1,3-bis-(diphenylphosphine)propane]$PdCl_2$ will crystallize out.

Preferably the halide of tin or germanium used as component c) is a chloride. Special preference is given to the use of tin chloride as the component c). In the catalyst compositions component c) is preferably present in a quantity of 1-100 mol and in particular 1-50 mol per mol of palladium compound.

The polymerization according to the invention is preferably carried out in a liquid diluent. Very suitable liquid diluents are lower alcohols such as methanol and ethanol.

Eligible olefinically unsaturated organic compounds that can be polymerized with carbon monoxide according to the invention are both compounds which consist exclusively of carbon and hydrogen and compounds which, in addition to carbon and hydrogen, contain one or more heteroatoms. The polymerization according to the invention is preferably used for preparing polymers of carbon monoxide with one or more olefinically unsaturated hydrocarbons. Examples of suitable hydrocarbon monomers are ethene and other $\alpha$-olefins, such as propene, butene-1, hexene-1 and octene-1 as well as styrene and alkyl-substituted styrenes such as p-methylstyrene and p-ethylstyrene. The polymerization according to the invention is particularly suitable for the preparation of copolymers of carbon monoxide with ethene and for the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain $10^{-7}$-$10^{-3}$ and in particular $10^{-6}$-$10^{-4}$ gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the preferred molar ratio of the olefinically unsaturated organic compounds relative to carbon monoxide is 10:1-1:5 and in particular 5:1-1:2. The carbon monoxide used in the polymerization according to the invention need not be pure. It may contain such contaminants as hydrogen, carbon dioxide and nitrogen.

The invention will now be illustrated with the aid of the following examples.

Example 1

A carbon monoxide/ethene copolymer was prepared as follows. A mechanically stirred autoclave with a volume of 250 ml was charged with a catalyst solution comprising
50 ml of methanol,
0.1 mmol of palladium acetate,
0.15 mmol of 1,3-bis(diphenylphosphine)propane, and
4 mmol of tin chloride ($SnCl_2$).
Carbon monoxide was introduced into the autoclave until a pressure of 30 bar was reached, followed by ethene until a pressure of 60 bar was reached. Finally the contents of the autoclave were heated to 100 °C. After 5 hours the polymerization was terminated by cooling to room temperature en then releasing the pressure. The polymer formed was filtered off, washed with methanol and dried in vacuo at room temperature.
15.0 g of copolymer was obtained.

Example 2

A carbon monoxide/ethene copolymer was prepared in substantially the same way as the copolymer of Example 1, the differences being:
a) the catalyst solution contained 0.1 mmol of bis(triphenylphosphine)palladium chloride instead of 0.1 mmol of palladium acetate, and
b) the catalyst solution contained no 1,3-bis-(diphenylphosphine)propane. 0.7 g copolymer was obtained.

Example 3

A carbon monoxide/ethene copolymer was prepared in substantially the same way as the copolymer of Example 1, the differences being:
a) a catalyst solution was used which comprised 50 ml of methanol and a complex of 0.1 mmol of palladium chloride and 0.1 mmol of 1,3-bis(diphenylphosphine)propane, and
b) the polymerization was terminated after 2.5 hours. 2.1 g of copolymer was obtained.

Example 4

A carbon monoxide/ethene copolymer was prepared in substantially the same way as the copolymer of Example 1, except that in this case a catalyst solution was used which comprised
50 ml of methanol.
a complex of 0.1 mmol of palladium chloride and
0.1 mmol of 1,3-bis(diphenylphosphine)propane, and
2 mmol of tin chloride.
5.6 g of copolymer was obtained.

Example 5

A carbon monoxide/ethene copolymer was prepared in substantially the same way as the copolymer of Example 1, except that in this case a catalyst solution was used which comprised
50 ml of methanol,
a complex of 0.1 mmol of palladium chloride and
0.1 mmol of 1,3-bis(diphenylphosphine)propane and
4 mmol of tin chloride.
12.0 g of copolymer was obtained.

Example 6

A carbon monoxide/ethene copolymer was prepared in substantially the same way as the copolymer of Example 1, the differences being:
a) a catalyst solution was used which comprised
50 ml of methanol,
a complex of 0.1 mmol of palladium chloride and
0.1 mmol of 1,3-bis(di-para-methoxyphenylphosphine)propane and
4 mmol of tin chloride, and
b) the polymerization was terminated after 1.5 hour. 3.0 g of copolymer was obtained.

Example 7

A carbon monoxide/ethene copolymer was prepared in substantially the same way as the copolymer of Example 1, except that in this case a catalyst solution was used which comprised
50 ml of methanol.
a complex of 0.1 mmol of palladium chloride and
0.1 mmol 1,3-bis(di-para-chlorophenylphosphine)-propane and
4 mmol of tin chloride.
6.8 g of copolymer was obtained.

The Examples 1 and 3-7 refer to polymer preparations according to the invention. In Examples 1 and 4-7 catalyst compositions were used which were based upon a palladium compound, a phosphorus bidentate ligand and tin chloride. In Example 3 a catalyst composition based upon a palladium halide and a phosphorus bidentate ligand was used. Example 2, where a catalyst composition was used which contained no phosphorus, arsenic or antimony bidentate ligand, falls outside the

scope of the invention; it has been included in the patent application for comparison. Comparison of the results of Examples 3, 4 and 5 shows that the activity of a catalyst composition based upon a palladium halide and a phosphorus bidentate ligand, which is already attractive in itself, can still be enhanced to a considerable extent by incorporating tin chloride in the composition.

The carbon monoxide/ethene copolymers prepared according to Examples 1 and 3-7 had a melting point of 257 °C. With the aid of $^{13}C$-NMR analysis it was established that these polymers had a linear alternating structure and thus consisted of units of the formula $-CO-(C_2H_4)-$.

## Claims

1. Process for the preparation of polymers, characterized in that a mixture of carbon monoxide and one or more olefinically unsaturated organic compounds is polymerized by using a catalyst composition based upon

a) a palladium compound,

b) a bidentate ligand of the general formula $R^1R^2$-M-R-M-$R^3R^4$ wherein M represents phosphorus, arsenic or antimony, $R^1$, $R^2$, $R^3$ and $R^4$ represent hydrocarbyl groups which may or may not be substituted with polar groups and R represents a bivalent organic bridging group containing at least two carbon atoms in the bridge, and

c) a halide of tin or germanium, on the understanding that the presence of this halide is not compulsory when the composition contains a palladium halide.

2. Process as claimed in claim 1, characterized in that a catalyst composition is used which is based upon a palladium salt of a carboxylic acid, such as palladium acetate, as the component a).

3. Process as claimed in claim 1, characterized in that a catalyst composition is used which is based upon an organic complex containing a palladium halide, such as palladium chloride, as the component a).

4. Process as claimed in one or more of claims 1-3, characterized in that a catalyst composition is used which is based upon a component b) in which M is phosphorus.

5. Process as claimed in one or more of claims 1-4, characterized in that a catalyst composition is used which is based upon a component b) in which the groups $R^1$, $R^2$, $R^3$ and $R^4$ are phenyl groups or substituted phenyl groups and in which organic bridging group R contains three carbon atoms in the bridge.

6. Process as claimed in one or more of claims 1-5, characterized in that a catalyst composition is used which is based upon a chloride of tin or germanium as the component c).

7. Process as claimed in any one of claims 1-6, characterized in that it serves for the preparation of copolymers of carbon monoxide and ethene or of terpolymers of carbon monoxide with ethene and a further olefinically unsaturated hydrocarbon, such as propene.

8. Polymers whenever prepared with a process as claimed in any one of claims 1-7.